# EUROPEAN PATENT SPECIFICATION

(11) **EP 3 864 061 B1**
(45) Date of publication and mention of the grant of the patent: **05.10.2022**
(21) Application number: 19789843.0
(22) Date of filing: 30.09.2019
(51) Int. Cl.: C08G 18/42, C08G 18/76, C08G 18/22, C08K 5/524, C08K 5/549, C08K 5/02, C08G 101/00, C08K 5/521

(54) **A RIGID POLYURETHANE FOAM FORMULATION AND FOAM MADE THEREFROM**
POLYURETHAN-HARTSCHAUMFORMULIERUNG UND DARAUS HERGESTELLTER SCHAUM
FORMULATION DE MOUSSE DE POLYURÉTHANE RIGIDE ET MOUSSE FABRIQUÉE À PARTIR DE CELLE-CI

(30) Priority: 09.10.2018 US 201862742959 P
(43) Date of publication of application: 18.08.2021
(73) Proprietor: Dow Global Technologies LLC, Midland, MI 48674 (US); Dow Silicones Corporation, Midland, Michigan 48686 (US)
(72) Inventor: PATANKAR, Kshitish, Midland, Michigan 48667 (US); SONNENSCHEIN, Mark F., Midland, Michigan 48667 (US); TOTH, Simon, Midland, Michigan 48611 (US); CHANG, Noel Mower, Midland, Michigan 48611 (US); MOORE, Jonathan D., Midland, Michigan 48667 (US); TULLOCH, Weston, Midland, Michigan 48611 (US); COLLINS, Thomas C., Midland, Michigan 48667 (US)
(74) Representative: Beck Greener LLP
(86) International application number: PCT/US2019/053717
(87) International publication number: WO 2020/076529

(56) References cited:
- JP-A- 2001 040 055

## Description

### FIELD OF THE INVENTION

The present invention relates to a rigid polyurethane foam formulation and a rigid polyurethane foam made therefrom.

### INTRODUCTION

Polyurethane foams are widely used as thermal insulating materials in appliances such as refrigerators or as insulation for roofs and walls in the construction industry. Typically these foams are closed-cell, rigid foams containing within the cells a low-conductivity gas, such as a hydrocarbon (HC). Polyurethane insulation foams can be produced by numerous methods including high pressure spraying, low pressure frothing, pour-in-place mold techniques, and free-rise and constrained rise-board production.

Cell fineness enhancement and thereby an improvement in the insulation properties of the foams is possible by adding so-called nucleating agents that promote cell nucleation. Perfluorinated hydrocarbons are widely used nucleating agents for production of polyurethane foams. Yet commercially available perfluorocarbons (PFCs) nucleating agents have disadvantages with regard to their Global Warming Potential (GWP). According to U.S. Environmental Protection Agency (EPA) report (Global Anthropogenic Non-CO₂ Greenhouse Gas Emissions: 1990-2020, June 2006 Revised), PFCs (e.g., PF-5056 available from The 3M Company) are considered high GWP gases.

Due to these environmental regulations, there is still a need for polyurethane foams with additives without GWP or with lower GWP than PFCs, which exhibit improvements in thermal insulation properties without compromising mechanical and fire retardancy properties of the polyurethane foams. JP2001040055A discloses rigid polyurethane foam formulations comprising polyether polyols, water and HCFC-141b as blowing agents, a silicone resin in decamethyl cyclopentasiloxane solution, polyisocyanate, catalyst and flame retardants. The obtained foams are applied as airless spray foams.

### SUMMARY OF THE INVENTION

The present invention provides a novel rigid polyurethane foam formulation including a cyclic siloxane in combination with a specific polyol, a polyisocyanate, a blowing agent, a non-silicone organic surfactant and a catalyst. The rigid polyurethane foam formulation can improve the thermal insulation performance of rigid polyurethane foams made therefrom without adversely affecting mechanical and fire retardant properties of the polyurethane foam.

In a first aspect, the present invention is a rigid polyurethane foam formulation comprising:
a polyester polyol having a hydroxyl number of from 150 to 600 mg KOH/g and a functionality of at least 2,
a blowing agent comprising water and an auxiliary blowing agent,
a non-silicone organic surfactant,
greater than 0.1% to less than 3.7% of a cyclic siloxane, by weight based on the total weight of the foam formulation,
a catalyst, and optionally a flame retardant; and
a polyisocyanate;
wherein the isocyanate index is in the range of from 100 to 500.

In a second aspect, the present invention is a rigid polyurethane foam formed from the foam formulation of the first aspect.

In a third aspect, the present invention is a method of forming a rigid polyurethane foam of the second aspect. The method comprises contacting:
a polyisocyanate with a polyester polyol having a hydroxyl number of from 150 to 600 mg KOH/g and a functionality of at least 2, a blowing agent comprising water and an auxiliary blowing agent, a non-silicone organic surfactant, greater than 0.1% to less than 3.7% of a cyclic siloxane, by weight based on the total weight of the foam formulation, a catalyst, and optionally a flame retardant.

### DETAILED DESCRIPTION OF THE INVENTION

"Polyurethane foam" as used herein also includes polyisocyanurate foam, urethane-modified polyisocyanurate foam, polyurethane-polyurea foam and polyisocyanurate-polyurethane-polyurea foam. "Rigid polyurethane foam" is typically a closed-cell polyurethane foam having an open cell content less than 30%, as determined by ASTM D6226-15. Rigid polyurethane foams typically show compressive strength equal or higher than 80 kPa at room temperature (20-25°C) measured in accordance with ASTM D 1621-16.

The rigid polyurethane foam formulation of the present invention comprises one or more polyester polyols. As used herein, the term "polyester polyol" means a polyol having ester functionality in its backbone. Generally the polyester polyol useful in the present invention may have an average functionality (average number of isocyanate-reactive groups/molecule) of 2.0 or more, 2.5 or more, or even 3.0 or more, and at the same time, 4.5 or less, 4.0 or less, or even 3.5 or less. Preferred polyester polyols are aromatic polyester polyols. As used herein, "aromatic" refers to organic compounds having at least one conjugated ring of alternate single and double bonds.

The polyester polyols useful in the present invention have a hydroxyl (OH) number in the range of from 150 to 600 mg KOH/g (i.e., mass of potassium hydroxide (KOH) in milligrams that is required to neutralize one gram of polyol), preferably less than 300 mg KOH/g. For example, the hydroxyl number of the polyester polyols is 150 mg KOH/g or more, 160 mg KOH/g or more, 170 mg KOH/g or more, 180 mg KOH/g or more, 190 mg KOH/g or more, or even 200 mg KOH/g or more, and at the same time, 600 mg KOH/g or less, 550 mg KOH/g or less, 500 mg KOH/g or less, 450 mg KOH/g or less, 400 mg KOH/g or less, 350 mg KOH/g or less, 300 mg KOH/g or less, 295 mg KOH/g or less, 290 mg KOH/g or less, 280 mg KOH/g or less, 270 mg KOH/g or less, 260 mg KOH/g or less, 250 mg KOH/g or less, or even 240 mg KOH/g or less, as measured according to ASTM D4274-16 (Test Method D). When a mixture of two or more polyester polyols is used, the hydroxyl number refers to the average hydroxyl number of these polyols.

The polyester polyols useful in the present invention can be polycondensation reaction products of polycarboxylic acids or their anhydrides with excess polyhydric alcohols. The polycarboxylic acids or anhydrides may be aliphatic, cycloaliphatic, aromatic and/or heterocyclic. Suitable polycarboxylic acids may include, for example, oxalic acid, malonic acid, succinic acid, glutaric acid, adipic acid, pimelic acid, suberic acid, azelaic acid, sebacic acid, maleic acid, fumaric acid, glutaconic acid, α-hydromuconic acid, β-hydromuconic acid, α-butyl-α-ethyl-glutaric acid, α,β-diethylsuccinic acid, oleic acid, linoleic acid, linoleic acid, dimerized fatty acids, phtalic acid, isophthalic acid, terephthalic acid, hemimellitic acid, 1,4-cyclohexane-dicarboxylic acid, and mixtures thereof. Preferably, the polycarboxylic acid is phthalic acid, terephthalic acid, or a mixture thereof. Suitable polyhydric alcohols that can be aliphatic or aromatic may include, for example, ethylene glycol, 1,3-propylene glycol, 1,2-propylene glycol, 1,4-butylene glycol, 1,3-butylene glycol, 1,2-butylene glycol, 1,5-pentane diol, 1,4-pentane diol, 1,3-pentane diol, 1,6-hexane diol, 1,8-octane diol, neopentyl glycol, cyclohexane dimethanol, 1,7-heptane diol, glycerol, 1,1,1-trimethylolpropane, 1,1,1-trimethylolethane, hexane-1,2,6-triol, α-methyl glucoside, pentaerythritol, quinitol, mannitol, sorbitol, sucrose, methyl glycoside, diethylene glycol, triethylene glycol, tetraethylene glycol, polyethylene glycols, dipropylene glycol, dibutylene glycol or blends thereof. Also included are compounds derived from phenols such as 2,2-(4,4'-hydroxyphenyl)propane, commonly known as bisphenol A, bis(4,4'-hydroxyphenyl)sulfide, and bis-(4,4'-hydroxyphenyl)sulfone. In some embodiments, the polyester polyol is generally prepared from the polycarboxylic acid comprising at least 30% by weight of phthalic acid residues, and/or residues of isomers thereof. In some further embodiments, the polycarboxylic acid is a mixture of terephthalic acid, oleic (or other fatty) acid and phthalic anhydride.

The rigid polyurethane foam formulation of the present invention may optionally comprise one or more polyether polyols. The polyether polyols can be used to balance rheokinetic properties during foaming, as well physical properties of the resultant foam after application. The polyether polyols may have a functionality of at least 2, from 3 to 8 or from 4 to 6, active hydrogen atoms per molecule. The polyether polyols may have a hydroxyl number in the range of from 200 to 850 mg KOH/g, from 300 to 800 mg KOH/g, or from 400 to 750 mg KOH/g. The polyether polyol can be aromatic or aliphatic. The polyether polyol can be produced by any known method. Typically, the polyether polyol is formed by reaction of an initiator with one or more alkylene oxides such as ethylene oxide, propylene oxide, butylene oxide or a combination thereof, either concurrently or sequentially, thereby forming a random and/or block copolymer. Suitable initiators may include, for example, water, polyhydric alcohols; linear and cyclic amine compounds or combinations thereof. Advantageously, the aromatic-initiated polyether polyol is an alkylene oxide adduct of phenol/formaldehyde/alkanolamine resin (frequently called a "Mannich" polyol) including such as an alkoxylated derivative of nonyl phenol, formaldehyde and diethanolamine. In addition, other alkoxylates of initiators such as glycerine, sucrose, ethylene diamine and their mixtures are commonly used. The polyether polyol is typically present in an amount of from zero to 30%, from 5% to 25%, or from 15% to 20%, by weight based on the total weight of the foam formulation.

The rigid polyurethane foam formulation of the present invention also comprises one or more polyisocyanates, which are reactive with the polyols. The polyisocyanates refer to any compound having an average of two or more, preferably an average of 2.0-4.0, isocyanate groups/molecule. The polyisocyanate may have an isocyanate groups (NCO) content from 15% to 36%, from 25% to 35%, or from 30% to 34% by weight. The polyisocyanates including organic polyisocyanates, modified polyisocyanates, isocyanate-based prepolymers, or mixtures thereof may be employed. These polyisocyanates may be aliphatic, cycloaliphatic or in particular aromatic. Suitable polyisocyanates may include, for example, 1,6-hexamethylene diisocyanate, 1,4-tetramethylene diisocyanate, isophorone diisocyanate, cyclohexane 1,4-diisocyanate, 4,4'-dicyclohexylmethane diisocyanate, 1,3-bis(isocyanatomethyl)cyclohexane, 1,4- bis(isocyanatomethyl)cyclohexane, hexahydrotolylene diisocyanate (all isomers), 4,4'-, 2,4' and 2,2'-isomers of diphenylmethane diisocyanate (MDI) and their isomeric mixtures, 2,4- and 2,6- toluene diisocyanate (TDI) and their isomeric mixtures, naphthylene-1,5-diisocyanate, 1-methoxyphenyl-2,4-diisocyanate, 3,3'-dimethoxy-4,4'-biphenyl diisocyanate, 3,3'-dimethyldiphenylmethane-4,4'-diisocyanate, m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate, diphenyletherdiisocyanate, 2,4,6-triisocyanatotoluene, 2,4,4'-triisocyanatodiphenylether, tris-(4-isocyanatophenyl)methane, toluene-2,4,6-triyl triisocyanate, 4,4'-dimethyldiphenylmethane-2,2',5',5'-tetra(isocyanate), m-phenylene diisocyanate, diphenylmethane-4,4'-biphenylene diisocyanate, 3,3'-dimethyl-4,4'-biphenyl diisocyanate, 1,3-bis-(isocyanatomethyl)benzene, 4-methoxy-1,3-phenylene diisocyanate, 4-ethoxy-1,3-phenylene diisocyanate, 2,4'-diisocyanatodiphenyl ether, 5,6-dimethyl-1,3-phenylene diisocyanate, 2,4-dimethyl-1,3-phenylene diisocyanate, 4,4- diisocyanatodiphenyl ether, benzidine diisocyanate, 4,6-dimethyl-1,3-phenylene diisocyanate, 9,10-anthracene diisocyanate, 4,4'-diisocyanatodibenzyl, 3,3'-dimethyl-4,4'-diisocyanatodiphenylmethane, 2,6'-dimethyl-4,4'-diisocyanatodiphenyl, polymethylene polyphenyl isocyanate (commonly known as polymeric MDI, PMDI), and mixtures thereof; and prepolymers thereof. Preferred polyisocyanate is the polymeric MDI, which is a mixture of polymethylene polyphenylene polyisocyanates in monomeric MDI. Polymeric MDI products may have a free MDI content of from 5 to 50% by weight, more preferably 10% to 40% by weight. Such polymeric MDI products are available from The Dow Chemical Company under the trademarks of PAPI^{™} and VORANATE^{™}. In one embodiment, the polyisocyanate is a polymeric MDI product having an average isocyanate functionality of from 2.3 to 3.3 isocyanate groups/molecule and an isocyanate equivalent weight of from 130 to 170. Commercially available products may include PAPI 27, PAPI 20, PAPI 94, PAPI 95, PAPI 580N, VORANATE M229, VORANATE 220, VORANATE M595 and VORANATE M600, all available from The Dow Chemical Company.

The polyisocyanate in the foam formulation is present in an amount to provide an isocyanate index of 100 or more, for example, 110 or more, 120 or more, 130 or more, 140 or more, 150 or more, 160 or more, 180 or more, or even 200 or more, and at the same time, 500 or less, 475 or less, 450 or less, or even 425 or less. Isocyanate index is calculated as the number of isocyanate-groups divided by the number of isocyanate-reactive hydrogen atoms in a formulation (including those contained by isocyanate-reactive blowing agents such as water) and multiplied by 100.

The rigid polyurethane foam formulation of the present invention comprises one or more cyclic siloxanes useful as nucleating agents. The use of cyclic siloxanes does not adversely affect the open cell content of the foam made therefrom and can reduce the cell size of the foam. The cyclic siloxanes may have the structure of formula (I), 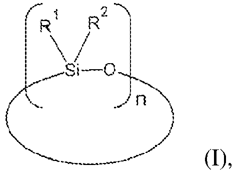 where n is from 3 to 6, R¹ and R² are each independently -H, -CH₃, -CH₂-CH₃,-CH=CH₂, -CH₂-CH₂-CF₃. Preferably, R¹ and R² are each independently -CH₃.

Examples of suitable cyclic siloxanes include hexamethylcyclotrisiloxane, octamethylcyclotetrasiloxane, decamethylcyclopentasiloxane, dodecamethylcyclohexasiloxane, and mixtures thereof. The cyclic siloxane in the foam formulation is present in an amount of greater than 0.1% to less than 3.7% (<3.7%), for example, 0.15% or more, 0.2% or more, 0.25% or more, 0.3% or more, or even 0.35% or more, 0.4% or more, 0.45% or more, 0.5% or more, 0.55% or more, or even 0.6% or more, and at the same time, 3.6% or less, 3.5% or less, 3% or less, 2.8% or less, 2.5% or less, 2.2% or less, 2% or less, 1.7% or less, 1.6% or less, 1.5% or less, 1.4% or less, 1.3% or less, 1.2% or less, 1.1% or less, 1% or less, 0.9% or less, 0.8% or less, 0.75% or less, or even 0.7% or less, by weight based on the total weight of the foam formulation.

The rigid polyurethane foam formulation of the present invention further comprises a blowing agent comprising water and one or more auxiliary agents such as physical blowing agents. The auxiliary blowing agents may include hydrocarbons, hydrofluorocarbons (HFCs), hydrofluoroolefins (HFOs), hydrochlorofluoroolefins (HCFOs), and mixtures thereof. The hydrocarbon blowing agents may include alkanes including pentane isomers, hexane isomers, and heptane isomers; cycloalkanes; preferably having from 4 to 8 carbon atoms; and mixture thereof. Specific examples of the hydrocarbon blowing agents include n-butane, isobutane, n-pentane, isopentane, 2,3-dimethylbutane, n-hexane, isohexane, n-heptane, isoheptane, cyclopentane, methylcyclopentane, cyclohexane, methylcyclohexane, cycloheptane, and mixtures thereof. Preferred hydrocarbon blowing agents include cyclopentane, n-pentane, isopentane, and mixtures thereof. Particularly desirable HFOs and HCFOs include trans-1-chloro-3,3,3-trifluoropropene (HCFO-1233zd(E)) and (z)-1,1,1,4,4,4-hexafluoro-2-butene (HFO-1336mzz-Z), and mixtures thereof. Examples of suitable hydrofluorocarbon blowing agents include 1,1,1,3,3-pentafluoropropane (HFC-245fa), 1,1,1,3,3-penta-fluorobutane (HFC-365mfc), 1,1,1,2,3,3,3-heptafluoropropane (HFC-227ea), 1,1,1,2-tetrafluoroethane (HFC-134a), and mixtures thereof. Preferably, the auxiliary blowing agent comprises hydrocarbons. In some embodiments, the blowing agent consists of water, cyclopentane and isopentane.

The amount of the blowing agents depends on the desired density of the foam. For example, the amount of water may be in the range of from 0.05% to 2.5%, from 0.1% to 2%, or from 0.2% to 1.5%, by weight based on the total weight of the foam formulation. The auxiliary blowing agent may be present in an amount of 2% or more, 3% or more, 4% or more, or even 5% or more, and at the same time, 15% or less, 10% or less, 8% or less, 7% or less, or even 6% or less, by weight based on the total weight of the foam formulation. Preferably, the weight ratio of the auxiliary blowing agent to the cyclic siloxane is greater than 1 and less than 20, for example, from 2 to 18, from 3 to 17, or from 4 to 16.

The rigid polyurethane foam formulation of the present invention also comprises one or more non-silicone organic surfactants, preferably, non-silicone polyether surfactants, which are useful as blowing agent stabilizing surfactants. The non-silicone organic surfactants may be polyethers having oxyethylene units and oxyalkylene units having at least 4 carbons, preferably oxybutylene units in a block copolymer morphology. The polyethers may have a hydroxyl equivalent weight in the range of from 100 to 250, from 120 to 200, or from 150 to 175. The polyethers may have a nominal hydroxyl functionality of from 2 to 7. The polyethers may comprise, by weight based on the combined weight of oxyethylene and oxyalkylene units, from 10% to 90% and from 10% to 90% of oxyalkylene units having at least 4 carbons. Preferably, the weight ratio of the oxyethylene units to the oxyalkylene units may be from 0.4 to 2, from 0.8 to 1.9, from 1.2 to 1.8, or from 1.5 to 1.75. The polyethers may be substantially free of oxypropylene units. The non-silicone organic surfactant can be polyoxyethylene-polyoxybutylene block copolymers, for example, as described in U.S. Patent No. 5,600,019.

Preferred non-silicone organic surfactant useful in the present invention is a poly(ethylene oxide-butylene oxide-ethylene oxide) triblock copolymer. The poly(ethylene oxide-butylene oxide-ethylene oxide) triblock copolymer may comprise the ethylene oxide units in an amount of from 10% to 90%, from 20% to 80%, or from 30% to 70%, by weight based on the weight of the triblock copolymer. In some embodiments, the non-silicone organic surfactant is a poly(ethylene oxide-butylene oxide-ethylene oxide) triblock copolymer with 62.3% by weight of ethylene oxide units, and a hydroxyl equivalent weight of 3400 g/eq.

The non-silicone organic surfactant useful in the present invention may have a weight average molecular weight of from 750 to 15,000 grams per mole (g/mol), from 1,000 to 12,000 g/mol, or from 2,000 to 10,000 g/mol, as measured according to ASTM D6579-11 using size exclusion chromatography method with polystyrene standards.

The non-silicone organic surfactants useful in the present invention are employed in an amount sufficient to stabilize the blowing agent, for example, typically in amount of from 0.2% to 2%, from 0.3% to 1.75%, from 0.4% to 1.2%, or from 0.5% to 0.75%, by weight based on the total weight of the foam formulation. The weight ratio of the cyclic siloxane to the non-silicone organic surfactant may be less than 6, for example, 5 or less, 4 or less, 3 or less, or even 2.5 or less.

The rigid polyurethane foam formulation of the present invention further comprises one or more catalysts including, for example, trimerization catalysts, tertiary amine catalysts, organometallic catalysts and mixtures thereof. The trimerization catalysts may be any known to those skilled in the art that will catalyze the trimerization of an organic isocyanate compound to form the isocyanurate moiety. Suitable trimerization catalysts may include, for example, quaternary ammonium salts, 2,4,6-(N,N-dimethylaminomethyl)phenols, hexahydrotriazines, sodium N-2-hydroxy-5-nonylphenyl-methyl-N-methylglycinate, potassium salts of carboxylic acids such as potassium octoate and potassium acetate, and mixtures thereof. Commercially available trimerization catalysts may include those from Evonik Corporation under the trade names, DABCO TMR, DABCO K15 and POLYCAT 46.

The tertiary amine catalysts may be useful as balanced catalysts. The tertiary amine catalysts include any organic compound which contains at least one tertiary nitrogen atom and is capable of catalyzing the hydroxyl/isocyanate reaction. Suitable tertiary amine catalysts may include, for example, triethylenediamine, tetramethylethylenediamine, 1-methyl-4-dimethylaminoethylpiperazine, N,N-dimethylcyclohexylamine, pentamethyldiethylenetriamine, N-methylmorpholine, N-ethylmorpholine, N,N-dimethylethanolamine, 2,4,6-tri(dimethylaminomethyl) phenol, bis(2-dimethylaminoethyl)ether, N,N',N-ethylmorpholine, and mixtures thereof. Examples of suitable organometallic catalysts include compounds of bismuth, lead, tin, titanium, iron, antimony, uranium, cadmium, cobalt, thorium, aluminum, mercury, zinc, nickel, cerium, molybdenum, vanadium, copper, manganese, zirconium, and combinations thereof. In some embodiments, a mixture of catalysts are used. In further embodiments, a mixture of two trimerization catalysts (such as potassium-based catalysts) with a tertiary amine catalyst is used as the catalyst in the production of polyisocyanurate foams.

The total amount of the catalysts is selected to provide a desired reaction rate. The catalyst may be present in an amount of 0.5% or more, 1% or more, or even 2% or more, and at the same time, 5% or less, 4% or less, or even 3% or less, by weight based on the total weight of the foam formulation.

The rigid polyurethane foam formulation of the present invention may comprise less than 0.1% of one or more silicone copolymer surfactants, less than 0.08%, less than 0.05%, or even less than 0.01%, by weight based on the total weight of the foam formulation. The silicone copolymer surfactants useful in the present invention may comprise one or more polyether-polysiloxane copolymers. As used herein, "polyether" designates a polyoxyalkylene group. The polyoxyalkylene group typically can comprise oxyethylene units (-C₂H₄O-), oxypropylene units (-C₃H₆O-), oxybutylene units (-C₄H₈O-), or combinations thereof. The polyether-polysiloxane copolymers can be polysiloxane polyoxylalkylene block copolymers. In some embodiments, the foam formulation is substantially free of the silicone copolymer surfactant (e.g., less than 0.05% or even less than 0.01% of the silicone copolymer surfactant).

The rigid polyurethane foam formulation of the present invention may optionally comprise one or more flame retardants. The flame retardants may include halogenated or nonhalogenated flame retardants. Useful flame retardants include brominated types, phosphoruscontaining types, antimony oxide, exfoliating graphite, alumina trihydrate, and combinations thereof. Suitable brominated flame retardants may include, for example, a tetrabromophthalate diester/ether diol such as SAYTEX RB-79 flame retardant from Albemarle Corporation or PHT4-Diol flame retardant from Lanxess AG , tetrabromobisphenol A, brominated polystyrene, brominated styrene-butadiene polymers, brominated epoxy resins, brominated alkanes such as 1-bromopropane, a brominated polymer such as Emerald 3000 polymeric flame retardant from Lanxess AG, or brominated acrylic monomer or polymer thereof; and mixtures thereof. Examples of suitable phosphoruscontaining flame retardants include various phosphinate, phosphate and phosphonate compounds such as aluminum diethylphosphinate, tris(2-chloropropyl)phosphate, triethyl phosphate, tris(2-chloroethyl)phosphate, tris(1,3-dichloropropyl)phosphate, dimethyl methylphosphonate, diethyl ethylphosphonate, diammonium phosphate, poly(m-phenylene methylphosphonate), oligomeric ethyl ethylene phosphate, resorcinol bis(diphenylphosphate), bisphenol A bis(diphenyl phosphate), and mixtures thereof. The flame retardant may be present in an amount of from 1% to 20%, from 2% to 15%, or from 3% to 10%, by weight based on the total weight of the foam formulation.

The rigid polyurethane foam formulation of the present invention may optionally include one or more crosslinkers. The crosslinkers useful in the present invention may have at least three isocyanate-reactive groups per molecule and an equivalent weight per isocyanate-reactive group of less than 400 g/eq. Examples of suitable crosslinkers include diethanol amine, monoethanol amine, triethanol amine, mono- di- or tri(isopropanol) amine, glycerol, trimethylolpropane, pentaerythritol, sorbitol and mixtures thereof. The crosslinker may be present in an amount of from zero to 2%, from 0.05% to 0.75%, or from 0.1% to 0.5%, by weight based on the total weight of the foam formulation.

The rigid polyurethane foam formulation of the present invention may optionally include one or more linear siloxanes and/or silanes. Suitable linear siloxanes may include, for example, octamethyltrisiloxane, hexamethyldisiloxane, dimethoxydimethylsilane, hexadecyltrimethoxysilane, hexamethyldisilazane, trimethylsilane, and mixtures thereof. The linear siloxane and/or silanes may be present in a combined amount of from zero to 3%, from 0.1% to 2.5%, from 0.5% to 2%, or from 1% to 1.5%, by weight based on the total weight of the foam formulation.

In addition to the components described above, the foam formulation of the present invention may further comprise any one or combination of other additives: colorants, additional surfactants, fillers and pigments, such as titanium dioxide, iron oxide, microspheres, alumina trihydrate, wollastonite, prepared glass fibers (dropped or continuous), polyester fibers and other polymeric fibers, and combinations thereof. These additives may be present in a combined amount of from zero to 30% by weight based on the weight of the foam formulation.

The rigid polyurethane foam of the present invention is prepared from the rigid polyurethane foam formulation described above. In general, the polyurethane foam may be prepared by bringing the various components of the foam formulation together under conditions such that the polyol(s) and isocyanate(s) react while the blowing agent causes the foam formulation to expand. Such polyurethane foam is typically prepared by intimately mixing the reaction components, i.e., a polyisocyanate component comprising the polyisocyanate (also known as "A-component" or "A side"), along with an isocyanate-reactive component (also known as "B-component" or "B side") typically comprising the polyester polyol, the non-silicone organic surfactant, and the blowing agent defined hereinabove, and optionally the flame retardant. An additional component (also known as "C-component" or "C side") may be included, as desired, for the introduction of various catalysts and other optional additives. The cyclic siloxane can be added to the isocyanate-reactive component. These components may be mixed together in any convenient manner, for example by using any of the mixing equipment described in the prior art for the purpose, such as a spray apparatus, a mix head with or without a static mixer, or a vessel, and then spraying or otherwise depositing the reacting mixture onto a substrate. The rigid polyurethane foam may also be produced in the form of slabstock, a molding, including for example, a pipe or insulated wall or hull structure, a sprayed foam, a frothed foam, or a laminate or laminated product formed with other materials such as hardboard, plasterboard, plastics, paper, metal, or a combination thereof. In general, the polyurethane foams may be produced by discontinuous or continuous processes, including the process referred to generally as the discontinuous panel process (DCP) and continuous lamination, with the foaming reaction and subsequent curing being carried out in molds or on conveyors.

The resultant rigid polyurethane foam of the present invention may have a density of from 24 to 80 killograms per cubic meter (kg/m³), from 25 to 70 kg/m³, from 26 to 60 kg/m³, from 27 to 50 kg/m³, from 28 to 40 kg/m³, or from 29 to 32 kg/m³, as measured according to ASTM D1622-14. The rigid polyurethane foam may have an open cell content less than 30%, less than 25%, less than 20%, less than 15%, or even less than 10%, as measured according to ASTM D6226-15.

The rigid polyurethane foam of the present invention may show good thermal conductivity, as indicated by k-factors at 25 degrees Celsius (°C) in the range of from 15 to 25 mW/m.K, for example, 22.5 mW/m.K or less, 22.0 mW/m.K or less, 21.8 mW/m.K or less, or even 21.7 mW/m.K or less, as measured according to ASTM C518-17. The rigid polyurethane foam of the present invention may also have comparable or better flame retardancy, as compared to foams without addition of the cyclic siloxane.

The rigid polyurethane foam of the present invention is particularly useful for thermal insulating applications such as in coolers, freezers, refrigerators, roofs, walls and decking. The foam formulation may also be used in free-rise applications.

### EXAMPLES

Some embodiments of the invention will now be described in the following Examples, wherein all parts and percentages are by weight unless otherwise specified.

TERATE HT 5500 Polyester Polyol, available from INVISTA Corporation, is an aromatic polyester polyol that has a typical OH number 235 mg KOH/gm, a functionality of 2, an equivalent weight of 239 g/eq, and a viscosity at 25°C of 3,500 centiPoise.

VORASURF^{™} 504 Surfactant, available from The Dow Chemical Company, is a polyethylene oxide-butylene oxide-polyethylene oxide triblock polymer with 62.3% of ethylene oxide units (by weight based on the weight of the triblock polymer), an equivalent weight of 3400 g/eq, and a nominal viscosity of 3300 centipoise at 25°C (VORASURF is a trademark of The Dow Chemical Company).

Tris-(2-chloroisopropyl)phosphate (TCPP), available from Sigma Aldrich, is used as a flame retardant.

Cyclopentane and isopentane are both used as blowing agents.

PAPI 580N PMDI, available from The Dow Chemical Company, is a polymeric methylene diphenyl diisocyanate (PMDI) having an average molecular weight of approximately 375 g/mol, a functionality of approximately 2.7, an isocyanate equivalent weight of approximately 136.5 g/eq, -NCO content of approximately 30.8%, and a viscosity of 700 centipoise at 25 °C.

Polycat 36 Catalyst, available from Evonik Corporation, is a tertiary amine catalyst and used as a balanced catalyst.

DABCO K15 Catalyst, available from Evonik Corporation, is potassium octoate in diethylene glycol with -15% potassium octoate and used as a trimerization catalyst.

Polycat 46, available from Evonik Corporation, is potassium acetate in ethylene glycol with -15% potassium acetate and used as a trimerization catalyst.

XIAMETER^{™} PMX-0244 Cyclotetrasiloxane, available from The Dow Chemical Company, is octamethylcyclotetrasiloxane (D4) (XIAMETER is a trademark of The Dow Chemical Company).

XIAMETER PMX-0245 Cyclopentasiloxane, available from The Dow Chemical Company, is decamethylcyclopentasiloxane (D5).

XIAMETER PMX-0246 Cyclohexasiloxane, available from The Dow Chemical Company, is dodecamethylcyclohexasiloxane (D6).

PF-5056, available from The 3M Company, is a perfluoroalkane.

The following standard analytical equipment and methods are used in the Examples.

Cream time and gel time of a foam formulation were measured in accordance with ASTM D7487-18.

Density of a foam was measured in accordance with ASTM D1622-14.

Thermal conductivity properties of foams at 25°C were measured in accordance with ASTM C518-17 and reported as k-factors.

Open cell content of a foam was measured in accordance with ASTM D6226-15.

Compressive strength was measured at 25°C in accordance with ASTM D 1621-16.

### Comparative Example (Comp Ex) A Formulation without a nucleating agent

An "A" side composition of a foam formulation consisted of polymeric methylene diphenyl diisocyanate (PMDI). A "B" side composition of a foam formulation was prepared by mixing together the components and concentrations described in Table 1. Compositions and relative weights of the sides "A", "B", and "C" are described in Table 1.

241.8 weight parts of the A-side composition were mixed to 106.2 weight parts of the B-side composition using a high speed pneumatic mixer at 2,000 revolutions per minute (rpm) for 10 seconds in a plastic container. The C-side composition was added to the center of the resultant mixture in the plastic container, mixed for 10 seconds, and then poured into a cardboard box. The resultant foam formulation was then allowed to set for 24 hours during which time it foamed and set. The foaming and the resulting foam had the characteristics set forth in Table 2.

### Comp Ex B Formulation with perfluoroalkane

The polyisocyanurate foam of Comp Ex B was prepared according to the same procedure as Comp Ex A, except that 1 part per hundred parts of the formulation of perfluoroalkane (PF 5056) was added to the B-side composition.

### Examples (Exs) 1-8

Polyurethane (PU) foams were prepared according to the same procedure as Comp Ex A with the addition of specified amounts of cyclic siloxane additives to the B-side composition of the foam formulation, based on formulations given in Table 1.

Physical properties of the foams prepared above were measured according to the test methods described above and results are given in Table 2.

**Table 1 Foam formulations**

| | Comp Ex A | Comp Ex B | Ex 1 | Ex 2 | Comp Ex C | Ex 3 | Ex 4 | Ex 5 | Comp Ex D | Ex 6 | Ex 7 | Ex 8 | Comp Ex E |
|---|---|---|---|---|---|---|---|---|---|---|---|---|---|
| *B-Side Composit ion* | wt % | wt % | wt % | wt % | wt % | wt % | wt % | wt % | wt % | wt % | wt % | wt % | wt % |
| Polyester Polyol¹ | 20.5 | 20.4 | 20.4 | 20.4 | 19.8 | 20.4 | 20.4 | 20.2 | 19.8 | 20.4 | 20.4 | 20.2 | 19.8 |
| Surfactan t² | 0.64 | 0.64 | 0.64 | 0.64 | 0.62 | 0.64 | 0.64 | 0.63 | 0.62 | 0.64 | 0.64 | 0.63 | 0.62 |
| TCPP | 3.85 | 3.83 | 3.83 | 3.82 | 3.65 | 3.83 | 3.82 | 3.79 | 3.65 | 3.83 | 3.82 | 3.79 | 3.65 |
| Water | 0.32 | 0.32 | 0.32 | 0.32 | 0.3 | 0.32 | 0.32 | 0.32 | 0.3 | 0.32 | 0.32 | 0.32 | 0.3 |
| Cyclopen tane | 3.68 | 3.68 | 3.68 | 3.68 | 3.68 | 3.68 | 3.68 | 3.6 | 3.68 | 3.68 | 3.68 | 3.6 | 3.68 |
| Isopentan e | 0.92 | 0.92 | 0.92 | 0.92 | 0.92 | 0.92 | 0.92 | 0.9 | 0.92 | 0.92 | 0.92 | 0.9 | 0.92 |
| D4 | -- | -- | 0.32 | 0.64 | 3.7 | -- | -- | -- | -- | -- | -- | -- | -- |
| D5 | -- | -- | -- | -- | -- | 0.32 | 0.64 | 1.58 | 3.7 | -- | -- | -- | -- |
| D6 | -- | -- | -- | -- | -- | -- | -- | -- | -- | 0.32 | 0.64 | 1.58 | 3.7 |
| PF-5056 | -- | 0.32 | -- | -- | -- | -- | -- | -- | -- | -- | -- | -- | -- |
| *A-Side Composit ion* | wt % | wt % | wt % | wt % | wt % | wt % | wt % | wt % | wt % | wt % | wt % | wt % | wt % |
| PMDI³ | 68.1 7 | 67.9 8 | 67.9 8 | 67.6 7 | 65.5 | 67.9 8 | 67.6 7 | 67.0 7 | 65.5 | 67.9 8 | 67.6 7 | 67.0 7 | 65.5 |

| *C-Side Composit ion* | wt % | wt % | wt % | wt % | wt % | wt % | wt % | wt % | wt % | wt % | wt % | wt % | wt % |
|---|---|---|---|---|---|---|---|---|---|---|---|---|---|
| Polycat 36 | 0.1 | 0.1 | 0.1 | 0.1 | 0.1 | 0.1 | 0.1 | 0.1 | 0.1 | 0.1 | 0.1 | 0.1 | 0.1 |
| DABCO K15 | 1.54 | 1.53 | 1.53 | 1.53 | 1.48 | 1.53 | 1.53 | 1.53 | 1.48 | 1.53 | 1.53 | 1.53 | 1.48 |
| Polycat 46 | 0.28 | 0.28 | 0.28 | 0.28 | 0.25 | 0.28 | 0.28 | 0.28 | 0.25 | 0.28 | 0.28 | 0.28 | 0.25 |
| *Total* | *100* | *100* | *100* | *100* | *100* | *100* | *100* | *100* | *100* | *100* | *100* | *100* | *100* |
| Isocyanat e index | 200 | 200 | 200 | 200 | 210 | 200 | 200 | 200 | 210 | 200 | 200 | 200 | 210 |

| | | | | | | | | | | | | | |
|---|---|---|---|---|---|---|---|---|---|---|---|---|---|
| wt%: weight percentage based on the total weight of the foam formulation; ¹TERATE HT 5500 polyester polyol, ²VORASURF 504 Surfactant; ³PAPI 580N Polymeric MDI. | | | | | | | | | | | | | |

As shown in Table 2, k-factors of the foams of the present invention decreased by at least 4%, as compared to that of Comp Ex A. Moreover, the foams of the present invention showed comparable compressive strength, as compared to Comp Ex A. The compressive strength was measured at the strain foams collapsed (typically <10% of strain). In contrast, the addition of 3.7% of cyclic siloxanes into foams resulted in higher k-factors and decreased compressive strength (Comp Exs C-E), as compared to those of Comp Ex A. In addition, unlike PF-5056 perfluoroalkane nucleating agent (Comp Ex B), the cyclic siloxanes have lower global warming potential (GWP).

**Table 2 Physical properties of foams**

| Exs | Additive and concentr ation¹ | Foam Characteristics | | | | | | | |
|---|---|---|---|---|---|---|---|---|---|
| | | Cream time (secon d) | Gel time (secon d) | Dens ity (Kg/ m³) | k-factor (mW/ m.K) at 25°C | % improve ment in k-factor² | Open cell (%) | Cell size³ (µm) | Compre ssive strength (MPa) |
| Comp Ex A | -- | 12 | 35 | 31.7 | 22.6 | 0 | 8.5 | 370 | 0.31 |
| Comp Ex B | PF-5056, 0.32% | 14 | 36 | 31.4 | 21.9 | 3.1 | 10.2 | 320 | 0.3 |
| Ex 1 | D4, 0.32% | 13 | 37 | 30.8 | 21.6 | 4.4 | 7.3 | 320 | 0.29 |
| Ex 2 | D4, 0.64% | 13 | 37 | 31.6 | 21.36 | 5.5 | 8.1 | 270 | 0.29 |
| Comp Ex C | D4, 3.7% | 16 | 42 | 30.9 | 24 | -6.2 | 22.7 | 400 (open cell) | 0.19 |
| Ex 3 | D5, 0.32% | 14 | 32 | 30.5 | 21.4 | 5.3 | 8.6 | 300 | 0.31 |
| Ex 4 | D5, 0.64% | 15 | 33 | 30.9 | 21.3 | 5.8 | 9.4 | 260 | 0.28 |
| Ex 5 | D5, 1.58% | 14 | 36 | 32 | 21.7 | 4 | 12.6 | 250 | 0.27 |
| Comp Ex D | D5, 3.7% | 17 | 45 | 31.5 | 24.4 | -8 | 21.3 | 380 (open cell) | 0.18 |
| Ex 6 | D6, 0.32% | 14 | 33 | 31.0 | 21.5 | 4.9 | 7.8 | 270 | 0.3 |
| Ex 7 | D6, 0.64% | 14 | 32 | 30.9 | 21.4 | 5.3 | 8.5 | 250 | 0.27 |
| Ex 8 | D6, 1.58% | 13 | 36 | 31.7 | 21.7 | 4 | 14.7 | 280 | 0.25 |
| Comp Ex E | D6, 3.7% | 16 | 46 | 31.5 | 24.2 | -7.1 | 23.2 | 320 | 0.18 |

| | | | | | | | | | |
|---|---|---|---|---|---|---|---|---|---|
| ¹Weight percentage based on total weight of formulation; ²k-factor improvement over that of Comp Ex A; ³ Cell size was determined by averaging about 20-25 cells from 2 to 3 micrographs taken at different locations from the same foam sample. | | | | | | | | | |

Fire properties of the foams are given in Table 3. As shown in Table 3, foams of the present invention showed comparable or even improved fire resistance as indicated by % mass loss and total heat release values.

**Table 3 Fire properties of foams**

| Exs | Additive and concentration¹ | Fire properties¹ | | |
|---|---|---|---|---|
| | | % mass loss | Mean heat release rate (HRR) (kW/m²) | Total Heat Release (MJ/m²) |
| Comp Ex A | -- | 90.5 | 22.9 | 15.2 |
| Comp Ex B | PF-5056, 0.32% | 98.5 | 21 | 13.5 |
| Ex 1 | D4, 0.32% | 98 | 26.4 | 16.4 |
| Ex 2 | D4, 0.64% | 68.5 | 37 | 10.7 |
| Comp Ex C | D4, 3.7% | 62.8 | 30.3 | 11.1 |
| Ex 3 | D5, 0.32% | 79.3 | 28 | 12.1 |
| Ex 4 | D5, 0.64% | 80.1 | 22.2 | 12.2 |
| Ex 5 | D5, 1.58% | 90.4 | 21 | 14.9 |
| Comp Ex D | D5, 3.7% | 74.6 | 20.9 | 12.6 |
| Ex 6 | D6, 0.32% | 72.9 | 28.3 | 10.6 |
| Ex 7 | D6, 0.64% | 71.9 | 22.2 | 11.1 |
| Ex 8 | D6, 1.58% | 69.1 | 24.7 | 10.4 |
| Comp Ex E | D6, 3.7% | 64.3 | 24.9 | 12 |

| | | | | |
|---|---|---|---|---|
| ¹ Fire properties were measured using Cone Calorimetry as per ASTM E1354-17. | | | | |

## Claims

1. A rigid polyurethane foam formulation comprising:
a polyester polyol having a hydroxyl number of from 150 to 600 mg KOH/g and a functionality of at least 2;
a blowing agent comprising water and an auxiliary blowing agent;
a non-silicone organic surfactant;
greater than 0.1% to less than 3.7% of a cyclic siloxane, by weight based on the total weight of the foam formulation;
a catalyst, and optionally a flame retardant; and
a polyisocyanate;
wherein the isocyanate index is in the range of from 100 to 500.

2. The foam formulation of claim 1, wherein the cyclic siloxane is selected from the group consisting of hexamethylcyclotrisiloxane, octamethylcyclotetrasiloxane, decamethylcyclopentasiloxane, and dodecamethylcyclohexasiloxane.

3. The foam formulation of claim 1, wherein the non-silicone organic surfactant is a polyether having from 10% to 90% of oxyethylene units and from 10% to 90% of oxyalkylene units having at least 4 carbons, by weight based on the combined weight of oxyethylene and oxyalkylene units.

4. The foam formulation of claim 1, wherein the non-silicone organic surfactant is a poly(ethylene oxide-butylene oxide-ethylene oxide) triblock copolymer.

5. The foam formulation of claim 1, wherein the auxiliary blowing agent is selected from the group consisting of pentane isomers, 2,2-dimethylbutane, hydrofluorocarbons and hydrofluoroolefins.

6. The foam formulation of claim 1, wherein the cyclic siloxane is present in an amount from 0.2% to 2% of, by weight based on the total weight of the foam formulation and the auxiliary blowing agent is present in an amount of from 3% to 6%, by weight based on the weight of the foam formulation.

7. The foam formulation of claim 1, wherein the weight ratio of the cyclic siloxane to the non-silicone organic surfactant is less than 6.

8. The foam formulation of claim 1, further comprising less than 0.1% by weight of a silicone copolymer surfactant, based on the total weight of the foam formulation.

9. A rigid polyurethane foam formed from the foam formulation of claim 1.

10. The rigid polyurethane foam of claim 9 having a density of from 24 kg/m³. to 80 kg/m³.

11. A method of forming a rigid polyurethane foam, the method comprising providing the foam formulation of claim 1.

## Patentansprüche

1. Polyurethanhartschaumformulierung, umfassend:
ein Polyesterpolyol mit einer Hydroxylzahl von 150 bis 600 mg KOH/g und einer Funktionalität von mindestens 2;
ein Treibmittel, das Wasser und ein Hilfstreibmittel umfasst;
ein silikonfreies organisches Tensid;
zu mehr als 0,1 Gew.-% bis weniger als 3,7 Gew.-% ein cyclisches Siloxan, bezogen auf das Gesamtgewicht der Schaumformulierung;
einen Katalysator und optional ein Flammschutzmittel; und
ein Polyisocyanat;
wobei der Isocyanatindex im Bereich von 100 bis 500 liegt.

2. Schaumformulierung nach Anspruch 1, wobei das cyclische Siloxan ausgewählt ist aus der Gruppe bestehend aus Hexamethylcyclotrisiloxan, Octamethylcyclotetrasiloxan, Decamethylcyclopentasiloxan und Dodecamethylcyclohexasiloxan.

3. Schaumformulierung nach Anspruch 1, wobei das silikonfreie organische Tensid ein Polyether mit 10 Gew.-% bis 90 Gew.-% Oxyethyleneinheiten und 10 Gew.-% bis 90 Gew.-% Oxyalkyleneinheiten mit mindestens 4 Kohlenstoffen, bezogen auf das kombinierte Gewicht von Oxyethylen- und Oxyalkyleneinheiten, ist.

4. Schaumformulierung nach Anspruch 1, wobei das silikonfreie organische Tensid ein Poly(ethylenoxid-butylenoxid-ethylenoxid)-Triblockcopolymer ist.

5. Schaumformulierung nach Anspruch 1, wobei das Hilfstreibmittel ausgewählt ist aus der Gruppe bestehend aus Pentanisomeren, 2,2-Dimethylbutan, Hydrofluorkohlenwasserstoffen und Hydrofluorolefinen.

6. Schaumformulierung nach Anspruch 1, wobei das cyclische Siloxan in einer Menge von 0,2 Gew.-% bis 2 Gew.-%, bezogen auf das Gesamtgewicht der Schaumformulierung, vorhanden ist und das Hilfstreibmittel in einer Menge von 3 Gew.-% bis 6 Gew.-%, bezogen auf das Gewicht der Schaumformulierung, vorhanden ist.

7. Schaumformulierung nach Anspruch 1, wobei das Gewichtsverhältnis des cyclischen Siloxans zu dem silikonfreien organischen Tensid weniger als 6 beträgt.

8. Schaumformulierung nach Anspruch 1, ferner umfassend zu weniger als 0,1 Gew.-% ein Silikoncopolymertensid, bezogen auf das Gesamtgewicht der Schaumformulierung.

9. Polyurethanhartschaum, gebildet aus der Schaumformulierung nach Anspruch 1.

10. Polyurethanhartschaum nach Anspruch 9, der eine Dichte von 24 kg/m³ bis 80 kg/m³ aufweist.

11. Verfahren zum Bilden eines Polyurethanhartschaums, wobei das Verfahren das Bereitstellen der Schaumformulierung nach Anspruch 1 umfasst.

## Revendications

1. Formulation de mousse de polyuréthane rigide comprenant :
un polyester-polyol ayant un indice d'hydroxyle allant de 150 à 600 mg de KOH/g et une fonctionnalité d'au moins 2 ;
un agent d'expansion comprenant de l'eau et un agent d'expansion auxiliaire ;
un agent tensioactif organique non-silicone ;
plus de 0,1 % à moins de 3,7 % d'un siloxane cyclique, en poids sur la base du poids total de la formulation de mousse ;
un catalyseur, et facultativement un ignifugeant ; et
un polyisocyanate ;
dans laquelle l'indice d'isocyanate est dans la plage allant de 100 à 500.

2. Formulation de mousse selon la revendication 1, dans laquelle le siloxane cyclique est choisi dans le groupe constitué d'hexaméthylcyclotrisiloxane, octaméthylcyclotétrasiloxane, décaméthylcyclopentasiloxane, et dodécaméthylcyclohexasiloxane.

3. Formulation de mousse selon la revendication 1, dans laquelle l'agent tensioactif organique non-silicone est un polyéther ayant de 10 % à 90 % de motifs oxyéthylène et de 10 % à 90 % de motifs oxyalkylène ayant au moins 4 carbones, en poids sur la base du poids combiné de motifs oxyéthylène et oxyalkylène.

4. Formulation de mousse selon la revendication 1, dans laquelle l'agent tensioactif organique non-silicone est un copolymère triséquencé poly(oxyde d'éthylène-oxyde de butylène-oxyde d'éthylène).

5. Formulation de mousse selon la revendication 1, dans laquelle l'agent d'expansion auxiliaire est choisi dans le groupe constitué d'isomères de pentane, 2,2-diméthylbutane, hydrofluororocarbures et hydrofluorooléfines.

6. Formulation de mousse selon la revendication 1, dans laquelle le siloxane cyclique est présent en une quantité allant de 0,2 % à 2 %, en poids sur la base du poids total de la formulation de mousse et l'agent d'expansion auxiliaire est présent en une quantité allant de 3 % à 6 %, en poids sur la base du poids de la formulation de mousse.

7. Formulation de mousse selon la revendication 1, dans laquelle le rapport pondéral du siloxane cyclique à l'agent tensioactif organique non-silicone est inférieur à 6.

8. Formulation de mousse selon la revendication 1, comprenant en outre moins de 0,1 % en poids d'un agent tensioactif copolymère de silicone, sur la base du poids total de la formulation de mousse.

9. Mousse de polyuréthane rigide formée à partir de la formulation de mousse selon la revendication 1.

10. Mousse de polyuréthane rigide selon la revendication 9 ayant une masse volumique allant de 24 kg/m³ à 80 kg/m³.

11. Procédé de formation d'une mousse de polyuréthane rigide, le procédé comprenant la fourniture de la formulation de mousse selon la revendication 1.
